Europäisches Patentamt

European Patent Office

Office européen des brevets

(11) Veröffentlichungsnummer: **0 307 812**
A2

## (12) EUROPÄISCHE PATENTANMELDUNG

(21) Anmeldenummer: 88114753.2

(22) Anmeldetag: 09.09.88

(51) Int. Cl.⁴: **B27N 3/00 , C08L 97/02**

(30) Priorität: 12.09.87 DE 3730776

(43) Veröffentlichungstag der Anmeldung:
22.03.89 Patentblatt 89/12

(84) Benannte Vertragsstaaten:
AT BE CH DE ES FR GB GR IT LI NL SE

(71) Anmelder: BASF Aktiengesellschaft
Carl-Bosch-Strasse 38
D-6700 Ludwigshafen(DE)

(72) Erfinder: Kochersperger, Winfried
Bergstrasse 10
D-6509 Monzernheim(DE)
Erfinder: Matthias, Guenther, Dr.
Meergartenweg 25 a
D-6710 Frankenthal(DE)
Erfinder: Schatz, Hermann
Neubergstrasse 50
D-6730 Neustadt(DE)

(54) Verbesserte mehrschichtige Spanplatten und ihre Herstellung.

(57) Gegebenenfalls beschichtete mehrschichtige Spanplatten, die aus Holzspänen mit harnstoffmodifizierten Phenolharz-Leimen in den den Deckschichten benachbarten Mittelschichten und aus Holzspänen mit sauer härtbaren Aminoplastharz-Leimen in den Deckschichten hergestellt sind, weisen eine verbesserte Haltbarkeit und verringerte Rißbildung zwischen den Schichten bei mechanischer Beanspruchung und gleichzeitig eine geringe Formaldehydabgabe auf.

EP 0 307 812 A2

## Verbesserte mehrschichtige Spanplatten und ihre Herstellung

Die Erfindung betrifft ggf. beschichtete mehrschichtige Spanplatten, die aus Holzspänen mit alkalischen modifizierten Phenolharz-Leimen in der oder den Mittelschicht(en) und mit sauer härtbaren Aminoplastharz-Leimen in den Deckschichten hergestellt sind und eine verbesserte Haltbarkeit zwischen den Schichten bei mechanischer Beanspruchung aufweisen bei gleichzeitig geringer Formaldehydabgabe.

Es ist bekannt, aus Phenol/Formaldehyd-Harzleimen oder Harnstoff/Phenol/Formaldehyd-Harzleimen, Holzspänen und bekannten Härtern und ggf. Zusatzstoffen Spanplatten herzustellen (vgl. z.B. DE-C-20 20 481, EP-A 69 267, DE-C 3 346 153). Insbesondere Leime auf der Basis von Harnstoff/Phenol/Formaldehyd-Kondensaten geben Spanplatten mit sehr geringer Formaldehyd-Abspaltung. Damit hergestellte Spanplatten haben aber den Nachteil, daß sie aufgrund einer hohen Quellung kaum oder schlecht beschichtbar sind, daß das dunkle Phenolharz durch helle Beschichtungsmaterialien durchscheint und der Alkaligehalt der Leime oft die Haftung herabsetzt. Will man die Spanplatten dennoch beschichten, ist die Herstellung von Deckschichten mit anderen Leimen notwendig, wie Aminoplast-Leimharzen, um den direkten Kontakt mit dem Phenol-Leimharz zu unterbinden.

Solche mehrschichtigen Spanplatten weisen jedoch andere Nachteile auf. An der Grenze zwischen der mit Phenol/Formaldehyd-Harzen verleimten Mittelschicht M und den mit Harnstoff/Formaldehyd-, Melamin/Formaldehyd-, Melamin/Harnstoff/Formaldehyd- oder Melamin/Harnstoff/Phenol/Formaldehyd-Kondensaten verleimten Deckschichten D ist der Holzspäneverbund schwächer als innerhalb der einzelnen Schichten. Dies führt leicht zu Rissen in der Grenzschicht, insbesondere bei erhöhter mechanischer Beanspruchung, erkennbar bei der Messung der Querzugfestigkeit der Spanplatten.

Der vorliegenden Erfindung lag die Aufgabe zugrunde, eine Spanplatte mit einer resolgebundenen Mittelschicht und aminoplastharzgebundenen Deckschichten zu entwickeln, die die beschriebenen Grenzschichtrisse nicht zeigt und gleichzeitig eine geringe Formaldehydemission aufweist.

Es wurde nun gefunden, daß die Aufgabe mit Mehrschichtspanplatten gelöst werden kann, bei deren Herstellung zur Verleimung der Mittelschicht harnstoffmodifizierte Phenol/Formaldehyd-Harze (sogenannte UPF-Harze), ggf. zusammen mit Isocyanat bzw. Polyisocyanaten, verwendet werden und zur Verleimung der Deckschicht(en) Aminoplastharze, insbesondere Melamin/Harnstoff/Phenol/Formaldehyd-Harz (sogenannte MUPF-Harze).

Gegenstand der Erfindung sind somit mehrschichtige Spanplatten, die aus mindestens einer Mittelschicht M mit Holzspänen und mindestens einem Harzleim LM und benachbarten Deckschichten D mit Holzspänen und mindestens einem Harzleim LD unter Anwendung von Druck und Hitze hergestellt sind, wobei die Harzleime LM und LD verschieden sind, die dadurch gekennzeichnet sind, daß als Harzleim LM für die der Deckschicht D benachbarte(n) Mittelschicht(en) M harnstoffmodifizierte alkalische Phenolharz-Leime (wie UPF-Harze) und als Leimharz LD für die Deckschichten D sauer härtbare Aminoplast-Leime verwendet wurden.

Es war überraschend, daß auf diese Weise die gewünschte Verbesserung erzielt werden kann, da die harnstoffmodifizierten Phenolharz-Leime der Mittelschicht Alkali enthalten, die Aminoplast-Leime der Deckschicht etwa neutral sind und sauer gehärtet werden. Beim Kontakt der alkalischen Mittelschicht mit der sauren Deckschicht war an der Grenze ein schwachalkalisches Medium mit einer ungenügenden Aushärtung der Phenolharz-Leime und auch eine ungenügende Aushärtung der Aminoplast-Harze an der Grenze zu erwarten. Auch ist die Quellung der mit dem modifizierten Phenolharz-Leim hergestellten Mittelschicht M von der Quellung der z.B. mit einem Melamin/Harnstoff/Phenol/Formaldehyd-Harzleim hergestellten Deckschicht D stark verschieden, was zu einer ungleichmäßigen Ausdehnung der Schichten bei Feuchtigkeit und zu einer Verschiebung, d.h. Verbundlockerung an den Schichtgrenzen führen sollte. Der Harnstoffzusatz führt erstaunlicherweise zur hinreichenden Festigkeit in den Grenzschichten und zur weitgehenden Bindung des Formaldehyds.

Harzleime LM, für die der oder den Deckschichten D benachbarte Mittelschicht (oder Mittelschichten M, sofern mehrere Mittelschichten M vorhanden sind), sind für erfindungsgemäß hergestellte mehrschichtige Spanplatten harnstoffmodifizierte alkalische Phenolharz-Leime, die durch Modifikation von alkalisch kondensierten Phenol-Formaldehyd-Kondensaten vom Resoltyp mit Harnstoff, insbesondere Zugabe von Harnstoff oder Auflösen von Harnstoff in wäßrigen Resollösungen hergestellt sind und allgemein UPF-Harze genannt werden. Besonders geeignete UPF-Harze enthalten Harnstoff in einer Menge von 5 bis 25 und insbesondere 15 bis 20 Gew.%, bezogen auf die Flüssigharzmenge. Die Herstellung von alkalisch kondensierten Phenol/Formaldehyd-Harzen vom Resol-Typ ist bekannt und z.B. in den Monographien A. Knop und L.A. Pilato, Phenolic Resins, Springer-Verlag Berlin-Heidelberg 1985, und A. Pizzi (Herausgeber), Wood Adhesives, Verlag Marcel Dekker, New York 1983, beschrieben. Die Herstellung von UPF-Harzen ist in der erstgenannten Monographie angegeben.

Seine Herstellung durch Auflösen von Harnstoff in Phenol/Formaldehyd-Harzen von Resoltyp ist z.B. in der DE-C 33 46 153, der EP-A 146 881 oder der US-A 4 045 595 beschrieben. Sind die UPF-Harze alkaliarm hergestellt, haben sie gemäß den Angaben in der DE-C 33 46 153 eine geringere Reaktivität und sind manchmal als Alleinbindemittel für die Mittelschichten M weniger geeignet. In solchen Fällen ist es zweckmäßig, zur Verleimung der Holzspäne der Mittelschicht oder Mittelschichten Polyisocyanate in Mengen bis zu ca. 50 und insbesondere 20 bis 60 Gew.% der Gesamtbindemittelmenge der entsprechenden Schicht(en) z.B. oligomere 4,4'-Diphenylmethandiisocyanate zusätzlich zu den UPF-Harzen mitzuverwenden, wobei mit Vorteil die Holzspäne zuerst mit Polyisocyanat besprüht werden und dann der UPF-Harzleim aufgetragen bzw. zugemischt wird.

Als vorteilhaft haben sich für die Mittelschichten UPF-Harzleime erwiesen, denen zur Reaktivitätsverbesserung Di- und/oder Trimethylolharnstoff in kleinen Mengen, insbesondere in Mengen von 1 bis 10, bevorzugt 1 bis 5 Gew.%, bezogen auf UPF-Flüssigharz, zugesetzt wurden (vgl. DE-A 37 08 740). Damit kann eine deutliche zusätzliche Verbesserung der Haftung zwischen Zwischenschicht(en) und Deckschicht(en) der erfindungsgemäßen mehrschichtigen Spanplatten erzielt werden. Dabei sind solche UPF-Harzleime oft von besonderem Vorteil, die außer durch Zusatz von Di- und/oder Trimethylolharnstoff noch mit Sulfit und/oder Hydroxymethansulfinat modifiziert sind, wobei diese bevorzugt in Mengen von 0,3 bis 1,5, insbesondere 0,5 bis 0,8 Gew.%, bezogen auf UPF-Flüssigharz, zugesetzt sind (vgl. DE-A 37 08 739). Die letztgenannten modifizierten UPF-Harzleime verbinden den Vorteil guter Lagerstabilität mit einer gleichzeitig guten Reaktivität der Harzleime.

Als UPF-Harzleime für die Mittelschichten können ferner auch Cokondensate aus Harnstoff, Phenol und Formaldheyd verwendet werden wie sie z.B. in der DDR-PS 204 704 beschrieben sind, doch sind UPF-Harzleime, bei denen ein Phenol/Formaldehyd-Harz vom Resoltyp durch nachträgliche Zugabe bzw. Reaktion mit Harnstoff modifiziert wurde, bevorzugt.

Erfindungsgemäße mehrschichtige Spanplatten können auch mehr als eine Mittelschicht M, z.B. 3 Mittelschichten aufweisen. In diesen Fällen sollen die Holzspäne in den der oder den Deckschichte(n) D benachbarten Mittelschichten M mit harnstoffmodifizierten Phenol/Formaldehyd-Harzen, ggf. unter Mitverwendung von Polyisocyanaten, verleimt sein, während die nicht den Deckschichten D benachbarten Mittelschichten M (Kernmittelschichten) mit anderen Harzen, insbesondere mit Phenol-Formaldehyd-Harzleimen, Polyisocyanaten oder insbesondere Mischungen beider verleimt sein können. Das Molverhältnis in den Phenol/Formaldehyd-Kondensaten ist nicht kritisch, da Phenol den Formaldehyd über C-C-Bindungen relativ fest bindet. In den verwendeten UPF-Harzen liegt im allgemeinen relativ viel freier, ungebundener Harnstoff vor. Sehr geeignete UPF-Harze für die Mittelschichtverleimung enthalten 70 bis 99, insbesondere 80 bis 90 Gew.% Harnstoff in freier oder gebundener Form, bezogen auf die Gesamtmenge an zugesetztem Harnstoff.

Als sauer härtbare Aminoplastharz-Leime für die Verleimung der Deckschichten D der erfindungsgemäßen mehrschichtigen Spanplatten kommen die bekannten Aminoharze (vgl. Kapitel "Amino Resins" in Vol. 2A von Ullmann's Encyclopedia of Industrial Chemistry, VCH Verlagsgesellschaft Weinheim 1985) wie Kondensate von Formaldehyd mit Harnstoff (UF-Harze), Melamin (MF-Harze), Melamin und Harnstoff (MUF-Harze), die auch modifiziert und/oder gemischt sein können, als Leimharze in Frage. Bevorzugt sind neben UF-Harzen insbesondere mit kleinen Mengen, insbesondere 1 bis 6, bevorzugt 2 bis 5 Gew.% an Phenol modifizierte Melamin/Harnstoff/Formaldehyd-Harze (MUPF-Harze) für die Verleimung der Holzspäne in den Deckschichten, wodurch sich wetterfeste Verleimungen der Deckschichten erzielen lassen. Geeignete MUPF-Harze und ihre Herstellung sind z.B. in der DE-C 20 20 481 (BASF) beschrieben. Oft vorteilhaft ist es, diese MUPF-Harze noch mit Sulfit zu modifizieren, wie es in der EP-A 69 267 beschrieben ist.

Es ist zweckmäßig, für die Aminoplastharz-Leime der Deckschichten formaldehydarme Harze zu verwenden, obwohl die Mittelschicht M beim Pressen der Plattenherstellung Formaldehyd abfängt, der zu ihr hin diffundiert und die UPF-Harze der Mittelschicht extrem wenig Formaldehyd abspalten. Mit Vorteil beträgt bei Harnstoff/Formaldehyd-Harzen (U/F-Harzen) das Molverhältnis U:F = 1:1 bis 1:1,4, insbesondere 1:1,05 bis 1:1,22 und besonders bevorzugt 1:1,1 bis 1:1,2. Bei MF-, MUF- und MUPF-Harzen beträgt das Molverhältnis $U_{\text{äquivalent}}$ : F = 1:1 bis 1:1,4, insbesondere 1:1,05 bis 1:1,22 und besonders bevorzugt 1:1,1 bis 1:1,2. Dabei wird der Umrechnung in Harnstoffäquivalente bei Anwesenheit von Melamin und/oder Phenol vereinfacht in Mol zugrundegelegt

$$1\ U = 1\ U_{\text{äquivalent}} = 2/3\ M = 2/3\ P.$$

Beispiele geeigneter Leimharztypen für die erfindungsgemäßen Spanplatten zeigt die folgende Tabelle,

3

wobei PF-Harze für eine der Deckschicht D nicht benachbarte Mittelschicht (Kernmittelschicht MK), UPF-Harze für eine der Deckschicht D benachbarte Mittelschicht M, MUPF-Harze und UF-Harze für eine Deckschicht D als Bindemittelharze zur Verleimung der Holzspäne dieser Schichten bei der Herstellung mehrschichtiger Spanplatten verwendet werden. Die Zahlen für die Harzkomponenten sind Gew.%, bezogen auf die wäßrige Harzlösung in der folgenden Tabelle:

| Schicht Harz Komponente | M UPF | M UPF | D MUPF | D MUPF | D UF | MK* PF |
|---|---|---|---|---|---|---|
| Formaldehyd | 44,8 | 43,4 | 54,9 | 53,9 | 55,4 | 57,7 |
| Harnstoff | 22,4 | 24,1 | 29,2 | 32,2 | 44,6 | 0 |
| Melamin | 0 | 0 | 14,0 | 12,2 | 0 | 0 |
| Phenol | 17,6 | 20,7 | 1,6 | 1,5 | 0 | 22,8 |
| Na-Sulfit | 0,2 | 0 | 0,2 | 0,3 | 0 | 0 |
| Dimethylolharnstoff | 0,5 | 0 | 0 | 0 | 0 | 0 |
| Trockengehalt % | 53 | 50 | 65 | 65 | 67 | 48 |
| Molverhältnis | | | | | | |
| U:F | - | - | - | - | 1:1,24 | - |
| bzw. | | | | | | |
| $U_{äqu.}$:F | 1:0,92 | 1:0,79 | 1:1,05 | 1:1,02 | - | 1:1,69 |

* MK = Kernmittelschicht

Die Herstellung der erfindungsgemäßen Mehrschichtspanplatten kann mit den vorstehend angegebenen Harzleimen für die entsprechenden Schichten in einer dem Fachmann an sich bekannten Weise erfolgen und kann vielfach variiert werden. Die nachstehenden Angaben sollen eine zweckmäßige Herstellung illustrieren, die fachmännischen Herstellungsmöglichkeiten aber nicht beschränken.

Leimflotten und Zusätze:

Aus den erfindungsgemäß verwendeten unterschiedlichen Leimharzen, Phenolharzen einerseits und Aminoplastharzen andererseits wird je eine Flotte angesetzt. Sie ist im einfachsten Fall die wäßrige Leimharzlösung selbst. Sie kann aber auch unter Zusatz bekannter Härter, die als Härtungsbeschleuniger wirken, von Paraffinemulsionen zur Hydrophobierung der Holzspäne, von Formaldehydfängern wie Harnstoff, von Additiven sowie inerten Salzen, Sulfitablauge (Ligninsulfonat), Fungiziden oder Bioziden hergestellt sein. Leimharze und vorgenannte Additive können aber auch getrennt auf die Holzspäne gegeben bzw. diesen zugemischt werden.

Die Phenolharze (Harzleime LM für die Zwischenschicht) sind zweckmäßig von Anfang an mit Harnstoff versetzt. Die entsprechende Flotte wird z.B. im Untermischverfahren mit einer Paraffinemulsion und einer Alkalicarbonatlösung (Härter) angesetzt. Man kann auch ohne Härterzusatz arbeiten. Die Flotte ist stark alkalisch und hat einen pH-Wert von 10 bis 12. Den gleichen pH-Wert weist auch das beaufschlagte Spänematerial auf. Die Phenolharzflotte kann mit Isocyanaten gemischt werden, man kann auch Späneschüttungen verwenden, von denen ein Teil Isocyanate, ein Teil Phenolharze als Binder enthalten.

Die Aminoharze, Harnstoff- oder Melamin-Harze oder Cokondensate oder Mischungen von beiden, die auch Modifizierungsmittel, auch Phenole enthalten können (Beat Meyer, "Urea Formaldehyde Resins", Addison-Wesley Publ. Comp., London 1979), werden im allgemeinen, wenn sie wie hier zur Deckschichtverleimung dienen, ohne Härter angesetzt. Man kann aber auch Härter zusetzen. Dies sind dann Säuren oder säure-bildende Substanzen. Zweckmäßigerweise werden aber Hydrophobierungsmittel und ggf. oben erwähnte Additive zugesetzt. Die Aminoharze allein weisen pH-Werte von 7 bis 9 auf und härten in diesem Bereich oder mit Härtern im sauren pH-Bereich bis pH 2.

Wichtig bei der Spanplattenherstellung ist der Feuchtehaushalt. Das Wasser kommt in die Spänematte hinein durch die Eigenfeuchte der Späne, die nach dem Trocknen verbleibt (0,5 bis 3 %) und durch die Leimflotte, die einen Wassergehalt von ungefähr 50 % aufweist. Das Wasser verläßt die Platte beim Pressen infolge der hohen Temperatur und beim anschließenden Kühlvorgang. Der Rest bleibt in der Platte. Von der Leimflotte her gesehen ist daher die Konzentration wichtig. Je höher die Feuchte, umso länger ist die Preßzeit, umso niedriger muß die Temperatur gewählt werden, wodurch eine noch längere Preßzeit zustande kommt.

Herstellung der Mehrschichtplatte:

Späne von zerspantem Holz, z.B. aus Fichte, Tanne, Pappel, Buche oder Eiche, mit einer durchschnittlichen Spangröße von einer Länge von 1 bis 10 mm und einer Dicke von 0,1 bis 2 mm werden z.B. in einem Trommelmischer mit Leim bzw. Leimflotte gemischt. Die beleimten Späne werden zu einem Vlies oder einer Matte geschüttet mit einer Gesamtdicke von 4 bis ca. 15 cm. Die Schichtdicke hängt von der Spangröße und dem Schüttgewicht der Holzart ab, sowie der beabsichtigten Rohdicke der Spanplatte. Wenn die Späne eine hohe Dichte aufweisen wie Buchenspäne und eine dünne Platte hergestellt werden soll, z.B. von 10 mm, dann ist die Matte dünn, z.B. 4 cm. Erfindungsgemäß werden die Späne mehrschichtig gestreut. Zuerst streut man die untere Deckschicht, beleimt mit einem Aminoharz, dann eine oder mehrere Mittelschichten, beleimt mit einem harnstoffmodifizierten Phenolharz und schließlich eine obere Deckschicht, die wie die untere aufgebaut ist. Falls mehrere Mittelschichten vorhanden sind, unterscheiden sich diese durch die Spangröße. Erfindungsgemäß kann die mittlere Schicht der Mittelschicht auch ein PF-Harz als Leimharz enthalten.

Die Menge an angewandtem Leimharz wird als Festharz pro Gewichtsteile absolut trockenes Holz (atro Holz) angegeben. Diese beträgt in der Mittelschicht bzw. den Mittelschichten je nach Beleimungsgüte zweckmäßig zwischen 7 und 10 Gew.%, in Sonderfällen bis zu 14 Gew.% Phenolharz bzw. Harnstoffmodifiziertes Phenolharz. In der Deckschicht bzw. den Deckschichten beträgt zweckmäßigerweise die Beleimung 7 bis 15 Gew.%. Die äußere Deckschicht ist in der Regel am höchsten beleimt.

Die resultierende Matte kann nun vorgepreßt werden, allerdings kann dieses Vorpressen auch entfallen. Vorteilhafte Bedingungen bei der Vorpresse sind:

Druck: 0,5 bis 2 N/mm²
Temperatur: 40 bis 60 °C (dickenabhängig, je dicker, umso wärmer wird die Vorpreßtemperatur gewählt)
Preßzeit: 15 bis 60 sec. (dickenabhängig, da mehr Spänematerial längere Zeit zum Verdichten benötigt).

Die so erzeugte Matte hat Abmessungen unter Laborbedingungen von z.B. 45 x 60 cm, in der Praxis von 2,5 m Breite und 4 bis 36 m Länge.

Danach wird der Vorpreßling in die Hauptpresse übergeführt. Diese kann eine Einetagenpresse oder, wenn viele, z.B. 6 bis 20 Matten, gleichzeitig gepreßt werden sollen, eine Mehretagenpresse sein. Vorteilhafte Preßbedingungen in der Hauptpresse sind:

Druck: 2,5 bis 5 N/mm²
Temperatur: 145 bis 240 °C
Preßzeit: 4,5 bis 20 sec. pro mm beabsichtigter Rohdicke

Die Temperatur bewirkt die Härtung des Leimharzes und damit die Klebverbindung zwischen den Spänen. Danach wird die Spanplatte gekühlt. Anschließend wird die Rohspanplatte auf Enddicke geschliffen. Dabei werden ca. 0,5 bis 1 mm jeweils einseitig abgeschliffen.

Die Prüfmethoden der Plattenqualitäten wie Biegefestigkeit, Dickenquellung, Zugfestigkeit senkrecht zur Plattenebene, Abhebefestigkeit und Schichtfestigkeit sind in DIN-Normen festgelegt und werden entweder trocken bei 20 °C oder nach Behandlung mit Wasser (z.B. Kochfestigkeit bei 100 °C) gemessen.

Die erfindungsgemäßen Mehrschichtspanplatten eignen sich bei Verwendung für Möbel, für dekorative Elemente etc. zur Beschichtung mit z.B. Furnieren, mit Duroplastharz getränkten Papieren, Schichtpreßstoffen, Polyesterlaminaten, Kunststoff-Folien, ohne daß Alkali ausblüht, Verfärbungen durch das Phenolharz oder Risse oder Ablösungen des Schichtmaterials durch die verschiedene Wasserquellung der Zwischen- und Deckschichten der Mehrschichtspanplatten auftreten.

Die folgenden Beispiele und Vergleichsversuche veranschaulichen die Herstellung und Eigenschaften der erfindungsgemäßen Mehrschichtspanplatten. Soweit nicht anders angegeben, beziehen sich Teile und Prozente auf das Gewicht.

Beispiel 1

Herstellung einer V20-Mehrschichtspanplatte:

a) Leimflotte für die Mittelschicht:
Aus 100 Teilen eines handelsüblichen harnstoffmodifizierten Phenol/Formaldehyd-Harzes (Kauresin®-Leim 266 fl. der BASF) mit einer Viskosität bei 20°C von 510 mPa•s, einem Trockenrückstand von 53 %, einem P:F-Molverhältnis von 1:2,6, einem Gehalt von 16 % an freiem Harnstoff, 6,4 % an freiem Alkali und mit einem pH-Wert von 12,7, 7 Teilen 50 %iger wäßriger Kaliumcarbonatlösung und 10 Teilen einer handelsüblichen 50 %igen Paraffin-Emulgator-Emulsion in Wasser wurde eine Leimflotte für die Mittelschicht hergestellt, die einen pH-Wert von 12,5 hatte.

b) Leimflotte für die Deckschicht:
Aus 100 Teilen eines handelsüblichen mit Melamin modifizierten Harnstoff-Formaldehyd-Harzes (Kaurit®-Leim 470 fl. der BASF) mit einer Viskosität bei 20°C von 602 mPa•s, einem Trockenrückstand von 65,2 %, einem pH-Wert von 8,6 und einem Molverhältnis U:F von 1:1,18, 5 Teilen einer 20 %igen wäßrigen Ammoniumchloridlösung und 10 Teilen einer handelsüblichen 50 %igen Paraffin-Emulgator-Emulsion in Wasser wurde eine Leimflotte für die Deckschicht hergestellt, die beim Ansetzen einen pH-Wert von 8 hatte.

c) Spanmaterial, Beleimung und Pressung:
c1) 5,5 kg von Spänen von Tanne und Fichte mit einer Spanfeuchte von 1,5 % (Spangröße: 50 % 1-3 mm, 45 % 0,5-1 mm, 5 % kleiner als 0,5 mm) wurden mit 1,1 kg der Leimflotte für die Mittelschicht, enthaltend 0,5 kg Harztrockenrückstand, verleimt. Der Trockenrückstandsanteil, bezogen auf die Masse der eingesetzten Späne, betrug 9,1 %, die Feuchte der beleimten Späne ca. 10 %.
c2) 5,5 kg von Spänen von Tanne und Fichte mit einer Spanfeuchte von 1,5 % (Spangröße: 80 % 0,5-1 mm, 20 % kleiner als 0,5 mm) wurden mit 1,3 kg der Leimflotte für die Deckschicht, enthaltend 0,64 kg Harztrockenrückstand, beleimt. Der Trockenrückstandsanteil, bezogen auf die Masse der eingesetzten Späne, betrug 11,6 %, die Feuchte der beleimten Späne 9 %.
c3) Untere Deckschicht, Mittelschicht und obere Deckschicht wurden so dosiert, daß sich 20 Gew.% untere Deckschicht, 60 Gew.% Mittelschicht und 20 Gew.% obere Deckschicht ergaben. Die Abmessung war 45 x 60 cm², d.h. 45 cm breit, 60 cm lang. Bei einer Preßtemperatur von 170°C wurde 90 s bei einem Druck von 4 N/mm², 90 s bei einem Druck von 2 N/mm² und 130 s bei einem Druck von 1 N/mm² gepreßt. Die resultierende Plattendicke betrug 18 mm, die Plattendichte 660 g/l.

d) Eigenschaften:
Die resultierende Mehrschichtspanplatte hatte folgende Eigenschaften:

Querzugsfestigkeit V 20 nach DIN 52 365: 0,6 N/mm². Die Bruchlinie lag in der Plattenmitte und nicht an der Grenze zwischen Mittel- und Deckschicht.
Abhebefestigkeit nach DIN 52 366: 1,5 N/mm²
Biegefestigkeit nach DIN 52 362: 22 N/mm²
Quellung nach 24 Stunden nach DIN 52 364: 13,7 %
Formaldehydabgabe der Platte, gemessen nach DIN EN 120: 4,5 mg/100 atro Holz bei einer Feuchte von 5 %.

Vergleichsversuch zu Beispiel 1

a) Das Beispiel wurde analog Beispiel 1 ausgeführt mit dem Unterschied, daß anstelle des UPF-Harzes in der Mittelschicht ein PF-Harz verwendet wurde. Als PF-Harz kam ein handelsübliches PF-Harz (Kauresin®-Leim 257 fl. der BASF) zur Anwendung. Das Harz hatte ein Molverhältnis von Formaldehyd zu Phenol von 2,6, eine Viskosität bei 20°C von 537 mPa•s, einen Trockenrückstand von 48 %, einen Gehalt an freiem Alkali von 7,7 % und einen pH-Wert von 12,4.

Die PF-Flotte wurde wie in Beispiel 1 beschrieben angesetzt.

b) Beleimung

Wegen des etwas niedrigeren Trockengehalts wurde, um den gleichen Trockenharzgehalt pro 100 Einheiten Späne zu erhalten, etwas höher als in Beispiel 1 dosiert, nämlich 1,2 kg PF-Flotte auf 5,5 kg Spänegemisch.

c) Eigenschaften:

Die resultierende Mehrschichtspanplatte hatte folgende Eigenschaften:

Querzugsfestigkeit V 20 nach DIN 52 365:     0,6 N/mm$^2$
Die Bruchlinie lag in 30 % der Fälle in der Grenzlinie zwischen Mittel- und Deckschicht.
Abhebefestigkeit nach DIN 52 366:     1,5 N/mm$^2$
Biegefestigkeit nach DIN 52 362:     19 N/mm$^2$
Quellung nach 24 h nach DIN 52 364:     13,0 %
Formaldehydabgabe der Platte, gemessen nach DIN EN 120:     8,7 mg/100 g atro Holz bei einer Feuchte von 6 %.

Herstellung einer V100-Mehrschichtspanplatte:

a) Die Spanplatte wurde analog Beispiel 1 hergestellt. Die Mittelschicht wurde mit UPF-Harz ausgeführt wie in Beispiel 1 beschrieben. Die Deckschicht wurde mit einem handelsüblichen MUPF-Harz (Kauramin®-Leim 535 fl. der BASF) auf gleiche Weise wie in Beispiel 1 beschrieben hergestellt. Das MUPF-Harz hatte eine Viskosität bei 20°C von 450 mPa•s, einen Trockenrückstand von 64 %, einem Gehalt an freiem Harnstoff von 6 % und einen pH-Wert von 9,2.

b) Die Beleimung und Pressung der Platte erfolgte wie in Beispiel 1.

c) Eigenschaften:

Querzugsfestigkeit V20 nach DIN 52 365:     0,6 N/mm$^2$
Die Bruchlinie lag ausschließlich in der Mittelschicht.
Querzugsfestigkeit V100 nach DIN 52 365:     0,20 N/mm$^2$
Die Bruchlinie lag bei 90 % der Prüfungen in der Mittelschicht, bei nur 10 % in der Grenzlinie zwischen Mittelschicht und Deckschicht.

Abhebefestigkeit nach DIN 52 366:     1,7 N/mm$^2$
Biegefestigkeit nach DIN 52 362:     23 N/mm$^2$
V 100-Quellung nach 24 Stunden:     16 %
Formaldehydabgabe der Platte, gemessen nach DIN EN 120: 5 mg/100 g atro Holz bei einer Feuchte von 7%

Vergleichsversuch zu Beispiel 2

Die Mittelschicht wurde entsprechend Vergleichsversuch zu Beispiel 1, die Deckschicht entsprechend Beispiel 2 hergestellt. Die Plattenherstellung erfolgte wie in Beispiel 2.

Eigenschaften:

Querzugsfestigkeit V 20 nach DIN 52 365:     0,6 N/mm$^2$
Die Bruchlinie lag in 30 % der Fälle in der Grenzschicht zwischen Mittel- und Deckschicht.

Querzugsfestigkeit V 100 nach DIN 52 365:     0,24 N/mm$^2$
Die Bruchlinie lag in 80 % der Fälle in der Grenzschicht zwischen Mittel- und Deckschicht.

Abhebefestigkeit nach DIN 52 366:     1,7 N/mm$^2$

Biegefestigkeit nach DIN 52 362: 20 N/mm²
V 100-Quellung nach 24 Stunden: 13,8 %
Formaldehydabgabe der Platte, gemessen nach DIN EN 120: 13 mg/100 g atro Holz bei einer Feuchte von 7,5 %

**Ansprüche**

1. Mehrschichtige Spanplatten, die aus mindestens einer Mittelschicht M mit Holzspänen und mindestens einem Harzleim LM und benachbarten Deckschichten D mit Holzspänen und mindestens einem Harzleim LD unter Anwendung von Druck und Hitze hergestellt sind, wobei die Harzleime LM und LD verschieden sind, dadurch gekennzeichnet, daß als Harzleim LM für die der Deckschicht benachbarte Mittelschicht(en) M harnstoffmodifizierte Phenolharz-Leime und als Harzleim LD für die Deckschichten D sauer härtbare Aminoplastharz-Leime verwendet wurden.

2. Mehrschichtige Spanplatten gemäß Anspruch 1, daß die als Harzleim LM verwandten harnstoffmodifizierten alkalischen Phenolharz-Leime Harnstoff-Phenol-Formaldehyd-Harze darstellten, die 5 bis 25 Gew.% Harnstoff enthielten.

3. Mehrschichtige Spanplatten gemäß Anspruch 1, dadurch gekennzeichnet, daß die als Harzleim LM verwandten Harnstoff-Phenol-Formaldehyd-Harze durch Zugabe von Dimethylolharnstoff und/oder Trimethylolharnstoff modifiziert waren.

4. Mehrschichtige Spanplatten gemäß einem der Ansprüche 1 bis 3, dadurch gekennzeichnet, daß der Harzleim LM und/oder Harzleim LD Sulfit und/oder Hydroxylmethansulfinat enthielt.

5. Mehrschichtige Spanplatten gemäß einem der Ansprüche 1 bis 4, dadurch gekennzeichnet, daß die als Harzleim LD für die Deckschichten verwandten sauer härtbaren Aminoplastharz-Leime Harnstoff/Formaldehyd-, Melamin/Formaldehyd-, Harnstoff/Melamin/Formaldehyd- und/oder Melamin/Harnstoff/Phenol/Formaldehyd-Kondensate darstellten.

6. Mehrschichtige Spanplatten gemäß einem der Ansprüche 1 bis 5, dadurch gekennzeichnet, daß die Methylolgruppen der verwandten Aminoplastharz-Leime partiell mit einem aliphatischen Alkohol mit 1 bis 4 C-Atomen verethert waren.

7. Mehrschichtige Spanplatten gemäß einem der Ansprüche 1 bis 6, dadurch gekennzeichnet, daß sie aus 3 Mittelschichten hergestellt sind, deren mittlere Mittelschichten mit Holzspänen und einem Phenol/Formaldehyd-Harzleim und deren den Deckschichten D benachbarte Mittelschichten mit Holzspänen und Harzleimen LM gemäß Ansprüchen 1 bis 4 hergestellt sind.

8. Mehrschichtige Spanplatten gemäß einem der Ansprüche 1 bis 7, dadurch gekennzeichnet, daß ein oder mehrere Mittelschichten unter Mitverwendung von Polyisocyanaten hergestellt sind.

9. Mehrschichtige Spanplatten gemäß einem der Ansprüche 1 bis 8, dadurch gekennzeichnet, daß auf die Oberfläche einer oder beider Deckschichten noch Beschichtungen aufgebracht sind.

10. Verfahren zur Herstellung von mehrschichtigen Spanplatten durch Erzeugen einer unteren Deckschicht D, Beschichten derselben mit ein oder mehreren Mittelschichten M und anschließendes Auftragen einer oberen Deckschicht D, wobei die Schichten Mischungen von Holzspänen mit mindestens einem härtbaren Leim, ggf. Härtern und anderen Zusatzstoffen darstellen, Formen und Härten des mehrschichtigen Materials unter Anwendung von Druck und Hitze zu einer Spanplatte und ggf. Beschichten ein oder beider Oberflächen der resultierenden Spanplatten, dadurch gekennzeichnet, daß die Deckschichten D als härtbare Leime sauer härtbare Aminoplastharz-Leime und die den Deckschichten D benachbarte(n) Mittelschicht(en) M als Leime harnstoffmodifizierte alkalische Phenolharz-Leime enthalten.